# EUROPEAN PATENT SPECIFICATION

(11) **EP 0 431 952 B1**
(45) Date of publication and mention of the grant of the patent: **28.02.1996**
(21) Application number: 90313291.8
(22) Date of filing: 07.12.1990
(51) Int. Cl.: G02F 1/137

(54) **Liquid crystal display device**
Flüssigkristall-Anzeigevorrichtung
Dispositif d'affichage à cristal liquide

(30) Priority: 08.12.1989 JP 319261/89; 24.03.1990 JP 74149/90
(43) Date of publication of application: 12.06.1991
(73) Proprietor: SEIKO EPSON CORPORATION, Shinjuku-ku Tokyo-to (JP)
(72) Inventor: Okumura, Osamu, c/o Seiko Epson Corporation, Suwa-shi, Nagano-ken (JP)
(74) Representative: Sturt, Clifford Mark

(56) References cited:
- EP-A- 0 131 216
- DE-A- 2 856 170
- US-A- 4 378 955

## Description

The present invention concerns a liquid crystal display device, and in particular a reflective type of liquid crystal display device.

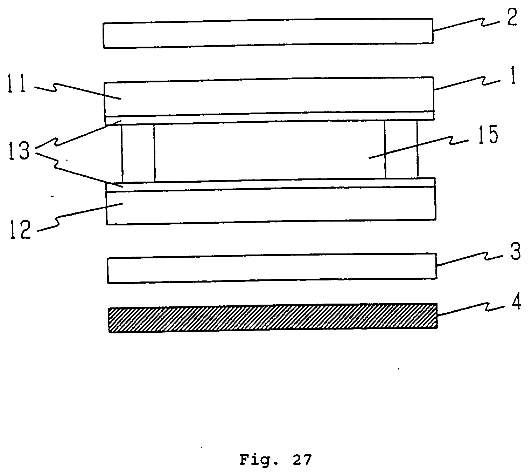

A conventional reflective type TN mode or STN mode of liquid crystal display device has been used widely in portable type personal computers and word processors, because back lighting is not required and the electrical demand is small. Figure 27 is a cross sectional view showing a conventional reflective type of liquid crystal display device in which the TN mode or STN mode are used. The conventional liquid crystal display device is provided with a liquid crystal cell 1, a pair of polarising plates 2 and 3 arranged on opposite sides of the liquid crystal cell 1, and a reflecting plate 4 provided on the outer side of the polarising plate 3.

However, the conventional reflective type of liquid crystal display device employing the TN mode or the STN mode has the problem that the display thereof is dark. Also, in the case of the STN mode, the problem arises that the display may have a colour cast. Further, such a display device has the problem that the display is seen in double, which is a peculiarity of reflective types of display device.

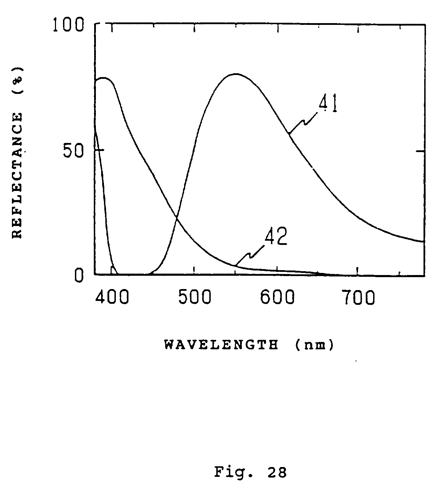

Figure 28 shows the spectral characteristics of a reflective type STN liquid crystal display device, when the electric field is turned on and off. In the Figure, the numeral 41 designates the spectral characteristics when the electric field is turned on, and the numeral 42 designates the spectral characteristics when the electric field is turned off. In this display device, the twist angle is 255°, the retardation value Δn x d is 0.85 µm (Δn is the birefringence ratio of the liquid crystal layer and d is the thickness thereof), and the angle formed between the polarisation axis and the rubbing direction is 45°. The colour cast of this display is remarkable, being yellow-green when it is turned off and blue when it is turned on. further, the luminous reflectance is only 65%, which is a disadvantage for visibility.

EP-A-0131216 concerns a twist nematic liquid crystal display which can be operated in the reflective mode using a single reflector and polariser.

It is an objection of the present invention, at least in its preferred form described below, to solve some or all of the problems mentioned above.

According to the present invention, there is provided a liquid crystal display device comprising a liquid crystal cell having a twist orientated liquid crystal layer sandwiched between a pair of opposed first and second substrates; and a linear polarising plate and a reflecting layer disposed on opposite sides of the crystal layer, characterised in that the liquid crystal layer has a twist angle in the range 0° to 70°, a retardation value Δn x d in the range 0.2 µm to 0.7 µm, where Δn is the birefringence ratio of the liquid crystal layer and d is the thickness thereof, and the angle θ formed between the polarisation axis of the polarising plate with the rubbing direction of the adjacent first substrate is in the range 35° to 115°, or that range shifted by an integral multiple of 90°, the twist direction of the liquid crystal layer being positive, the arrangement being such that the twist angle, the retardation Δn x d and the angle θ are such that the light impinging on the reflecting layer from the liquid crystal layer is substantially linearly polarised light.

Preferably, the polarisation direction of the light impinging on the reflecting layer is substantially parallel or perpendicular to the longitudinal direction of the liquid crystal molecules adjacent to the reflecting layer. Advantageously, in this instance, the twist angle is in the range 30° to 70°, the retardation value Δn x d is in the range 0.25 µm to 0.64 µm, and the angle θ is in the range 58° to 111°.

In a second aspect of the present invention there is provided a display device comprising a liquid crystal cell having a twist orientated liquid crystal layer sandwiched between a pair of opposed substrates; and a linear polarising plate and a reflecting layer disposed on opposite sides of the crystal layer, characterised in that the liquid crystal layer has a twist angle in the range 175° to 210°, and a retardation value Δn x d in the range 0.51 µm to 0.75 µm, where Δn is the birefringence ratio of the liquid crystal layer and d is the thickness of the liquid crystal layer and the angle θ formed between the polarisation axis of the polarisation plate with the rubbing direction of the adjacent first substrate is in the range 42° to 71°, or that range shifted by an integral multiple of 90°, the twist direction of the liquid crystal layer being positive, the arrangement being such that the twist angle, the retardation Δn x d and the angle θ are such that the light impinging on the reflection layer from the liquid crystal layer is substantially linearly polarised light.

In a third aspect of the present invention there is provided a display device comprising a liquid crystal cell having a twist orientated liquid crystal layer sandwiched between a pair of opposed substrates; and a linear polarising plate and a reflecting layer disposed on opposite sides of the liquid crystal layer, characterised in that the liquid crystal layer has a twist angle in the range 250° to 265°, and a retardation value Δn x d in the range 0.55 µm to 0.96 µm, where Δn is the birefringence ratio of the liquid crystal layer and d is the thickness of the liquid crystal layer, and the angle θ formed between the polarisation axis of the polarising plate with the rubbing direction of the adjacent first substrate is in the range -2° to 30°, or that range shifted by an integral multiple of 90°, the twist direction of the liquid crystal layer being positive, the arrangement being such that the twist angle, retardation Δn x d and the angle θ are determined so that the light impinging on the reflecting layer from the liquid crystal layer is substantially linearly polarised light.

One embodiment of the invention features a substrate having a surface irregularity in the range 0.1 µm 2.0 µm on its surface facing the liquid crystal layer.

The reflecting layer may then comprise a reflecting film provided on this surface of the substrate.

The display device according to the present invention seeks especially to improve the brightness of the display, and preferably employs only one polarising plate for this purpose (conventionally two polarising plates are employed). By using only one polarising plate, a brighter display can be provided. By this feature alone, an improvement in the brightness of about 12% may be achieved.

For obtaining an ideal result in relation to the brightness in the present invention, linearly polarised light entering the liquid crystal cell through the polarising plate passes a first time through the liquid crystal layer to the reflecting layer and returns through the liquid crystal layer to pass through the polarising plate under the same condition of linear polarisation. However, such control of the polarisation may only be achieved under limited conditions and, as a result of study, such conditions have been found to be provided when the liquid crystal layer is formed as described below to allow the light impinging on the reflecting layer to be linearly polarised.

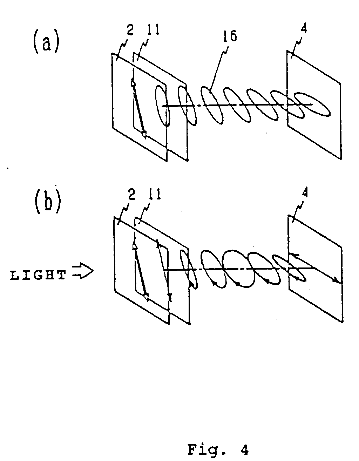

This aspect of the invention is explained further with reference to Figure 4. Figure 4 (a) shows the orientation 16 of liquid crystal molecules in a liquid crystal cell having a polarising plate 2, an upper substrate 11, and a reflecting plate 4. Figure 4 (b) shows how the orientation is varied when light entering from the left hand side, as illustrated, is linearly polarised by the polarising plate 2. Such polarisation changes to elliptic polarisation in general as a result of the phase difference caused by the birefringence of the liquid crystal molecules. If the light is linearly polarised as shown in the Figure when it strikes the reflecting plate 4, the light is returned to its former linear polarisation by passing through exactly the same polarisation variation in the outward direction on its return when it is reflected towards the left. Therefore, it can pass through the polarising plate 2 in the outward direction without loss of luminance.

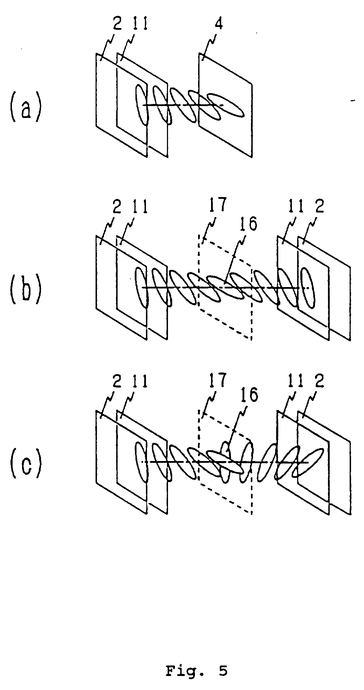

The phenomenon mentioned above is explained further below. The reflective type of liquid crystal display device of the present invention shown in Figure 5 (a) is optically equivalent to the transmission type of liquid crystal display device shown in Figure 5 (b). In Figure 5 (b), the liquid crystal molecules and two polarising plates 2 are arranged symmetrically relative to a plane 17, in which the reflecting plate 4 is positioned in Figure 5 (a).

When a pair of phase shifting plates having equivalent retardation are superposed so that their slow or optically extra-ordinary axes cross orthogonally, it is well known that the phase difference generated by the plates is compensated. It has been proposed in Japanese Official Gazette No. 64-519 to use such a principle in a liquid crystal display device employing the new super twisted nematic mode (referred to hereinafter as "NTN"). The display device is provided with two superposed liquid crystal cells, each having equivalent retardation and reversed twist directions. Figure 5 (c) shows the molecular arrangement of the liquid crystal in this instance, wherein a pair of liquid crystal molecules are orthogonally crossed at the centre plane 17 of the liquid crystal layer about which the plates 2 are symmetrically positioned. This is compensated by the above mentioned principle.

In a reflective type of liquid crystal display device, it is required that the equivalent liquid crystal molecule arrangement shown in Figure 5 (b) acts similarly to that shown in Figure 5 (c) for the entering linearly polarised light to exit under a similar condition of linear polarisation. The present inventor has found that this condition can be satisfied when the light is under linear polarisation in the centre plane 17 of the liquid crystal layer. This can easily be confirmed from the fact that no variation in the optical characteristics occurs even if the pair of polarising plates having the liquid crystal layer therebetween are rotated by 90°.

It is not unusual for the condition to be satisfied, in which the light from the liquid crystal cell striking the reflecting plate becomes substantially linearly polarised. However, this is not the only condition to be satisfied and the liquid crystal display device has the further limitation that a sufficient contrast ratio needs to be obtained when voltage is applied thereto to provide a display.

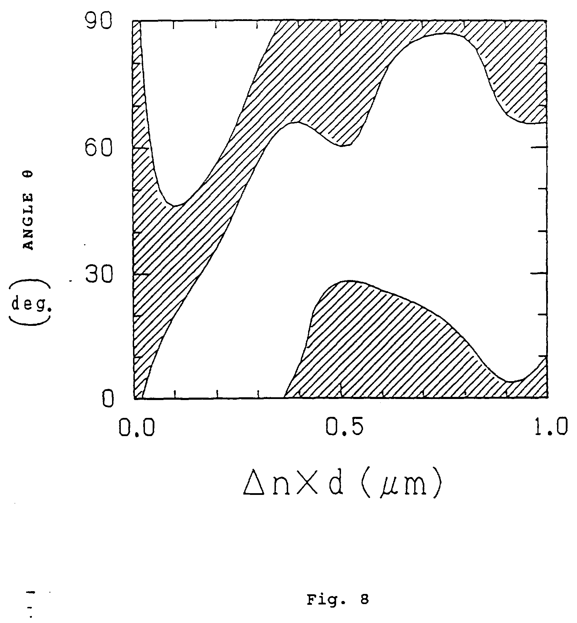

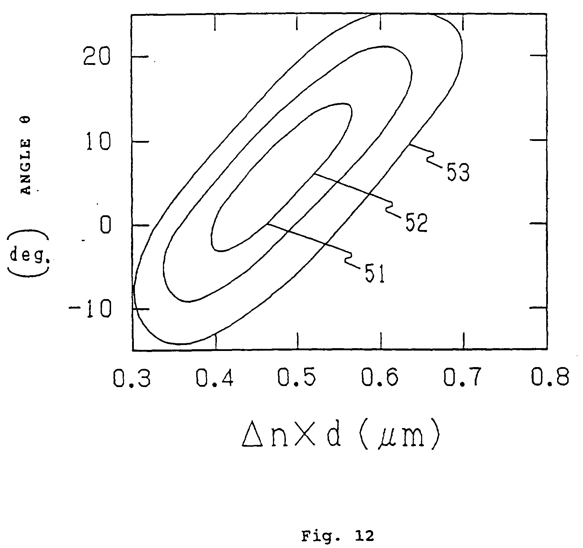

For example, a range, in which the light passing from the liquid crystal cell into the reflecting phase becomes substantially linearly polarised when the twist angle is 60°, can be defined as the region indicated by hatching in Figure 8. Figure 12 also shows a range, in which a satisfactory contrast is obtained when the twist angle is 60°, the horizontal axis in Figure 12 representing the retardation value Δn x d, and the vertical axis representing the angle θ which is formed by the polarisation axis of the polarising plate with the orientation direction of the liquid crystal at the upper substrate. The numerals 51, 52 and 53 designate the regions in which a contrast ratio of more than 1: 20, 1:10 and 1:5, respectively, can be obtained. Since identical results are obtained if the angle θ is added to an integral number of multiples of 90°, 0° can be considered to be in series with 90° in these Figures.

It can be seen in Figure 12 that the contrast ratio becomes a maximum when Δn x d is 0.46 µm and θ is 4° in the case when the twist angle is 60°, and the conditions in which the cell obtains a sufficient contrast ratio are limited to adjacent such values only.

Therefore, it can be stated that the condition that the light passing from the liquid crystal cell into the reflecting phase becomes substantially linearly polarised is a necessary but not sufficient condition for obtaining a satisfactory display.

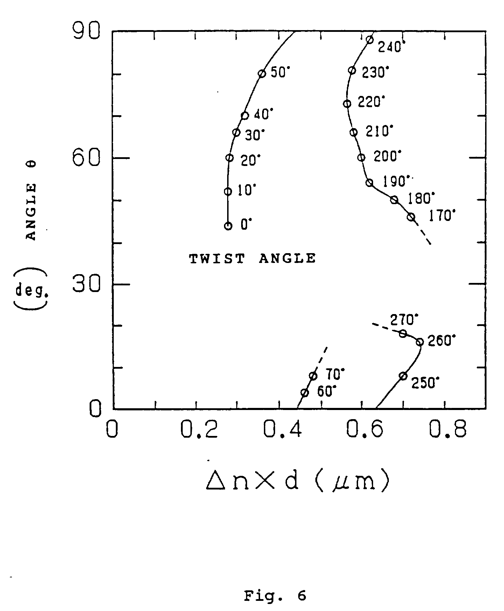

Similarly, the conditions in which the contrast ratio becomes a maximum for each twist angle in the range 0° to 270° is shown in Figure 6.

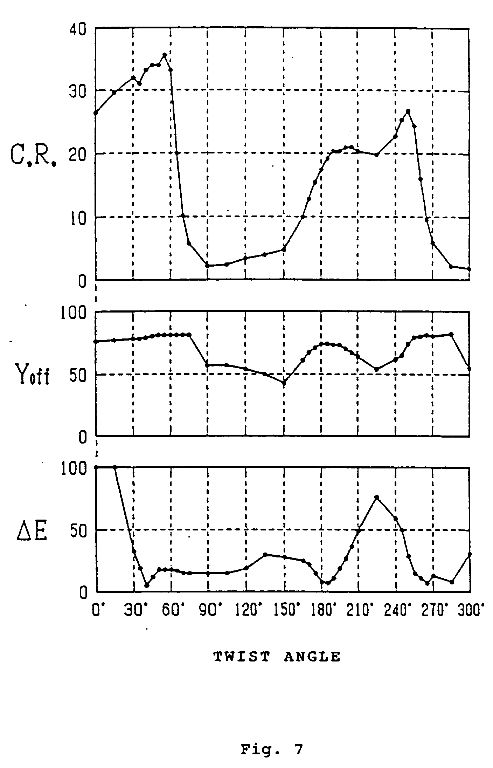

Figure 7 shows the optical characteristics of the liquid crystal cell in each of the instances shown in Figure 6. The horizontal axis represents the twist angle of the liquid crystal material, and the vertical axis represents, from the top, the contrast ratio C.R., the luminance reflectance Y_{off} when the display device is turned off, and the colour cast E. The brightness of the reflecting plate combined with the polarising plate is defined as 100% for Y_{off}. However, in practice, it becomes only a maximum of 80% in view of the effect of the surface reflection. The colour cast E can be defined by the square root of a^{*2} + b^{*2} by using a^{*} and b^{*} in the CIE 1976 L*A*B* colour table. As this value becomes smaller, the degree of colour cast in the display becomes less.

In Figure 7, it is required that the twist angle be in the range of 0° to 70° or in the range of 170° to 265°, for obtaining a contrast ratio which is more than 1:10 for a high quality image display. When the twist angle is in the range 265° to 270°, the contrast ratio lowers to about 1:6, but the electro-optical characteristics are sufficiently good for use in a large capacity display and, therefore, may be employed satisfactorily in some instances.

Particularly, in the case in which the twist angle is in the range 30° to 70°, in the range 175° to 210° or in the range 250° to 265°, since the colouring of the display is reduced, a better display can be achieved.

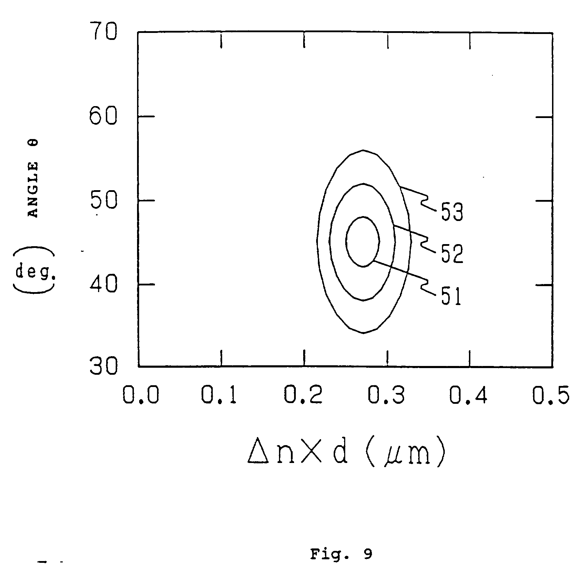

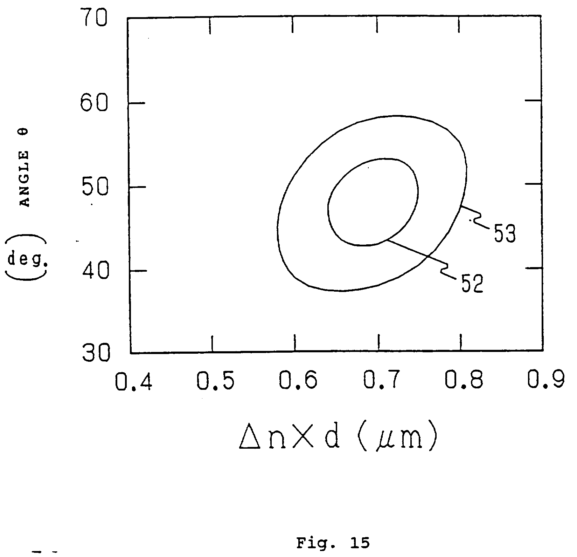

As described above, the limitation of the retardation value Δn x d and the angle θ in accordance with the range of twist angle is based on Figure 6, which shows the conditions of the cell for obtaining the maximum contrast, and Figure 9 to 23, which show the conditions of the cell giving a sufficient contrast ratio for each twist angle. In Figures 9 to 23, the numerals 51, 52 and 53 designate the contrast curves for the contrast ratios 1:20, 1:10 and 1:5, respectively, it being assumed that a ratio of more than 1: 5 is necessary for a standard display and a ratio of more than 1:10 is necessary for a high quality image display.

When there is an irregularity in an inner surface of the liquid crystal cell, the colouring of the display can be reduced further. This effect results from the fact that the colouring is averaged by a variation in the thickness of the liquid crystal layer. In particular, when a metal film having an irregularity is provided on an inner surface of a substrate of the liquid crystal cell, the problem of the display being seen in double can be concurrently solved by this non-directional reflecting layer. However, if the irregularity is less than 0.1 µm, the effect of reducing the colouring of the display cannot be obtained, and the metal film effectively becomes a mirror without any non-directional properties. When the irregularity exceeds 2 µm, the colouring of the display increases and the contrast ratio is noticeably reduced. This may be understood from the example presented in Figure 12 where the retardation value Δn x d is 0.16 µm, when the commonly-used general liquid crystal having a value n, which is 0.08, is used.

The invention is described further, by way of example, with reference to the accompanying drawings, in which:-
Figure 1 is a cross sectional view of a liquid crystal display device according to the present invention employed in Examples 1 to 3, Examples 5 to 19 and Comparative Experiments 1 to 3 below;
Figure 2 is a cross sectional view of a liquid crystal display device according to the present invention employed in Example 4;
Figure 3 is a view showing the relation between various axes of the liquid crystal display device according to the present invention;
Figure 4 (a) is a view showing the molecular orientation in a liquid crystal layer of the liquid crystal display device and Figure 4 (b) is a view showing how the polarisation of light varies in the liquid crystal display device;
Figure 5 (a) is a view showing the molecular orientation in a liquid crystal layer of the liquid crystal display device according to the present invention, Figure 5 (b) is a view showing the molecular orientation in a liquid crystal layer of a transmission type of liquid crystal display device, which is optically equivalent thereto, and Figure 5 (c) is a view showing the molecular orientation in a liquid crystal layer of a transmission type of liquid crystal display device employing the conventional NTN mode;
Figure 6 is a view showing the conditions in which the contrast ratio of the liquid crystal display device becomes a maximum;
Figure 7 is a view showing three optical characteristics (namely contrast ratio C.R., luminance reflectance Y_{off} and colour cast E) which are obtained under conditions in which the contrast ratio becomes a maximum;
Figure 8 is a view showing a range of conditions in which light entering the reflecting phase of the liquid crystal display device become substantially linearly polarised and a high reflection ratio is obtained, when the twist angle is 60°;
Figure 9 is a view showing a range of conditions for the liquid crystal display device, in which a sufficient display contrast is obtained when the twist angle is 0°;
Figure 10 is a view showing a range of conditions for the liquid crystal display device, in which a sufficient display contrast is obtained when the twist angle is 30°;
Figure 11 is a view showing a range of conditions for the liquid crystal display device, in which a sufficient display contrast is obtained when the twist angle is 45°;
Figure 12 is a view showing a range of conditions for the liquid crystal display device, in which a sufficient display contrast is obtained when the twist angle is 60°;
Figure 13 is a view showing a range of conditions for the liquid crystal display device, in which a sufficient display contrast is obtained when the twist angle is 70°;
Figure 14 is a view showing a range of conditions for the liquid crystal display device, in which a sufficient display contrast is obtained when the twist angle is 170°;
Figure 15 is a view showing a range of conditions for the liquid crystal display device, in which a sufficient display contrast is obtained when the twist angle is 175°;
Figure 16 is a view showing a range of conditions for the liquid crystal display device, in which a sufficient display contrast is obtained when the twist angle is 180°;
Figure 17 is a view showing a range of conditions for the liquid crystal display device, in which a sufficient display contrast is obtained when the twist angle is 200°;
Figure 18 is a view showing a range of conditions for the liquid crystal display device, in which a sufficient display contrast is obtained when the twist angle is 210°;
Figure 19 is a view showing a range of conditions for the liquid crystal display device, in which a sufficient display contrast is obtained when the twist angle is 250°;
Figure 20 is a view showing a range of conditions for the liquid crystal display device, in which a sufficient display contrast is obtained when the twist angle is 255°;
Figure 21 is a view showing a range of conditions for the liquid crystal display device, in which a sufficient display contrast is obtained when the twist angle is 260°;
Figure 22 is a view showing a range of conditions for the liquid crystal display device, in which a sufficient display contrast is obtained when the twist angle is 265°;
Figure 23 is a view showing a range of conditions for the liquid crystal display device, in which a sufficient display contrast is obtained when the twist angle is 270°;
Figure 24 is a view showing the spectral characteristics of the liquid crystal display device in Example 1 when the electric field is turned OFF and when the electric field is turned ON, respectively;
Figure 25 is a view showing the spectral characteristics of the liquid crystal display device in Example 2 when the electric field is turned OFF and when the electric field is turned ON, respectively;
Figure 26 is a view showing the spectral characteristics of the liquid crystal display device in Example 3 when the electric field is turned OFF and when the electric field is turned ON, respectively;
Figure 27 is a cross sectional view of a conventional liquid crystal display device; and
Figure 28 is a view showing the spectral characteristics of the conventional liquid crystal display device when the electric field is turned OFF and when the electric field is turned ON, respectively.

### Example 1

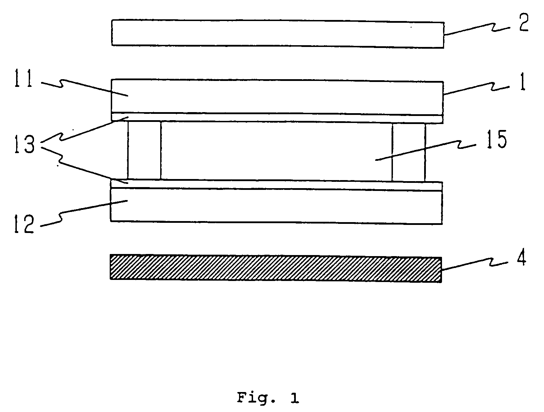

Figure 1 is a cross sectional view of a liquid crystal display device according to the present invention. The liquid crystal display device comprises a liquid crystal cell 1, a polarising plate 2, and a reflecting plate 4. The liquid crystal cell 1 has an upper substrate 11, a lower substrate 12, transference electrodes 13, and a liquid crystal layer 15. For the liquid crystal layer, the material ZLI-4472 (Δn = 0.0871), which is a product of the Merck Corporation, was used and was twist oriented with the liquid crystal cell having a cell gap of 5.3 µm. The retardation value Δn x d was 0.46µm.

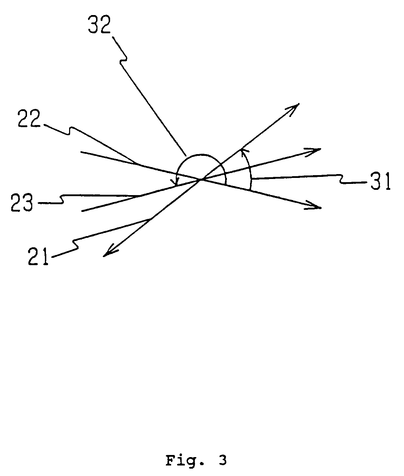

Figure 3 is a view showing the relation of each axis of the liquid crystal display device of the present invention viewed from an observation direction. The numeral 21 designates the direction of the polarisation axis of the polarising plate 2, and the numeral 22 designates the rubbing direction of the upper substrate 11. The numeral 31 designate the angle θ formed between the axes 21 and 22, and the numeral 32 designates the twist angle (the twist direction of the liquid crystal is a positive value). In this instance, the angle θ is set to be 4° and the twist angle is set to be 60° to the left.

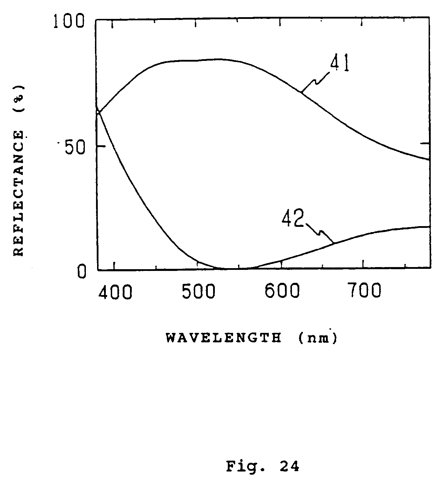

Figure 24 is a view showing the spectral characteristics of the liquid crystal display device, which is manufactured under the conditions described below. In the Figure, the numeral 41 designates the spectral characteristics when the electric field is turned off, and the numeral 42 designates the spectral characteristics when the electric field is turned on. The luminance reflectance Y_{off} during the off state reaches a maximum of 81% and the display colour approximates to white. The luminance reflectance during the on state drops as low as 2.4%, the possible contrast ratio C.R. having a maximum of 1:34.

The twist angle of the liquid crystal display device of the present example is 60°, its voltage transmission factor properties being similar to those of a liquid crystal display device employing the usual twisted nematic mode. It is possible to carry out multiplex driving with a duty ratio in the range of 1/2 to 1/16.

Figure 12 shows a range of conditions of the cell in which a sufficient display contrast can be obtained when the twist angle is similar to the present example (60°). The same results can be obtained if the angle θ is added to an integral multiple of 90°. Therefore, when θ is -10°, this is similar to the case when θ is 80° or θ is 170°. The numerals 51, 52 and 53 designate the contrast curves for the contrast ratios 1:20, 1:10 and 1:5, respectively.

In the interior of each of these contrast curves, a sufficient display contrast can be expected. For example, when the value Δn x d is 0.60 µm and the angle θ is 16°, the contrast ratio C.R. is 1:16 and the luminance reflectance Y_{off} is 80%. When the retardation value Δn x d is 0.34 µm and the angle θ is -6°, the contrast ratio is 1:10 and the luminance reflectance Y_{off} is 71%. Further, when the retardation value Δn x d is 0.48 µm and the angle θ is -6°, the contrast ratio is 1:6 and the luminance reflectance Y_{off} is 84%.

On the outside of these curves, a sufficient display contrast cannot be obtained. For example, when the retardation value Δn x d is 0.28 µm and the angle θ is -12°, the contrast ratio is 1:3 and the luminance reflectance Y_{off} is 62%. When the retardation value Δn x d is 0.72 µm and the angle θ is 4°, the contrast ratio is 1:2 and the luminance reflectance Y_{off} is 76%. Further, when the retardation value Δn x d is 0.4 µm and the angle θ is 30°, the contrast ratio is 1:0.4 and the luminance reflectance Y_{off} is 24%.

Therefore, it is necessary for the value Δn x d to be at least in the range 0.3 µm to 0.7 µm, and the angle θ to be in the range -13° to 25°, when the twist angle is 60°.

### Example 2

The liquid crystal display device of Example 2 has the same structure as that of Example 1. The liquid crystal cell 1 in this instance is provided with a liquid crystal layer comprising ZLI-4436 (Δn = 0.1100), a product of the Merck Corporation. The cell gap is 5.4 µm, and the retardation value Δn x d is 0.59 µm. In Figure 3, the angle 31 (the angle θ) is set to be 60° and the twist angle is set to be 200° to the left.

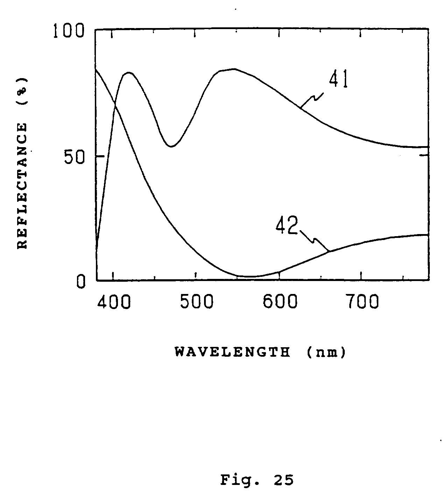

Figure 25 is a view showing the spectral characteristics of the liquid crystal display device, which is manufactured under the conditions described below. The luminance reflectance Y_{off} during the off state has a maximum of 70% and the display colour approximates to white. The luminance reflectance during the on state drops to 3.3%. Therefore, the possible contrast ratio C.R. is 1:21 at a maximum.

The liquid crystal display device of the present Example is remarkable in that the twist angle is larger than that of the liquid crystal display device of Example 1, and, therefore, it is suitable for multiplex driving.

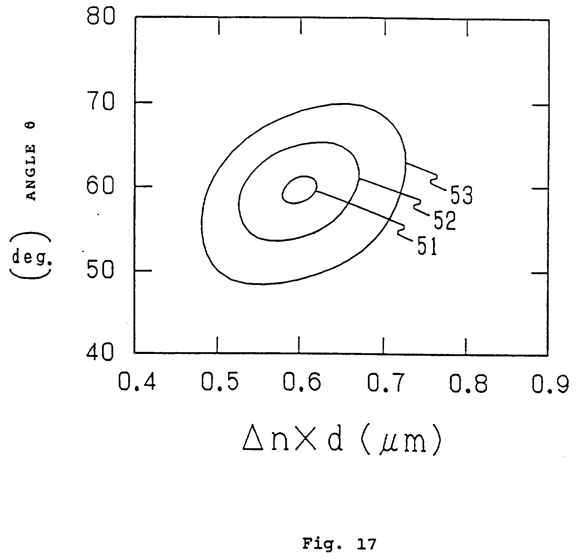

In Figure 17, the range of conditions of the liquid crystal display device in which a sufficient display contrast is obtained with the twist angle being similar to that of the present example (200°) is shown.

In the interior of each contrast curve 51, 52 and 53, a sufficient display contrast can be expected. For example, when the retardation value Δn x d is 0.66 µm and the angle θ is 64°, the contrast ratio is 1:11 and the luminance reflectance Y_{off} is 75%. Further, when the retardation value Δn x d is 0.58 µm and the angle θ is 52°, the contrast ratio is 1:8 and the luminance reflectance Y_{off} is 77%.

Outside these curves, a sufficient display contrast cannot be obtained. For example, when the retardation value Δn x d is 0.7 µm and the angle θ is 46, the contrast ratio is 1:2 and the luminance reflectance Y_{off} is 62%. Further, when the retardation value Δn x d is 0.5 µm and the angle θ is 90°, the contrast ratio is 1:0.3 and the luminance reflectance Y_{off} is 19%.

Therefore, it is necessary for the value Δn x d to be at least in the range 0.48 µm to 0.72 µm, and the angle θ to be in the range 48° to 70° when the twist angle is 200°.

### Example 3

The liquid crystal display device of Example 3 has a similar structure to that of Example 1. The liquid crystal cell is provided with a liquid crystal layer comprising ZL1-4427 (Δn = 0.1127), a product of the Merck Corporation. The cell gap is 6.6 µm, and the retardation value Δn x d is 0.74 µm. In this instance, a polyimide RN-721, a product of Nissan Chemical Industry Corporation, was used for an orientation film, and the liquid crystal material was provided with a pre-tilt angle of about 10° by means of rotary rubbing with a rayon flocked blanket. In Figure 3, the angle 31 (the angle θ) is set to be 14° and the twist angle 32 is set to be 255° to the left.

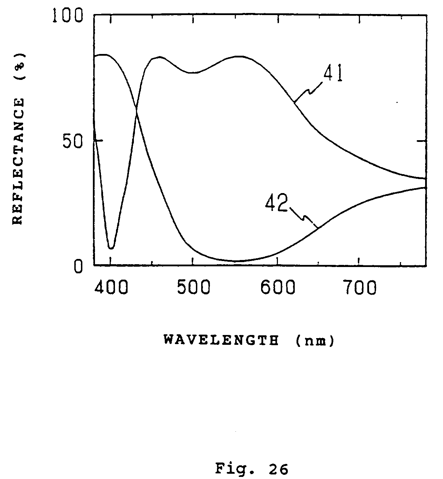

Figure 26 is a view showing the spectral characteristics of the liquid crystal display device, which is manufactured under the conditions described below. The luminance reflectance Y_{off} during the off state has a maximum of 79% and the display colour approximates to white. The luminance reflectance during the on state drops as low as 3.2%. Therefore, the possible contrast ratio C.R. is 1:25 at a maximum.

The liquid crystal display device of the present example is remarkable in that the twist angle is large, being 255°, and, therefore, a high contrast ratio of 1:18 can be obtained under multiplex driving having a duty ratio of 1/480.

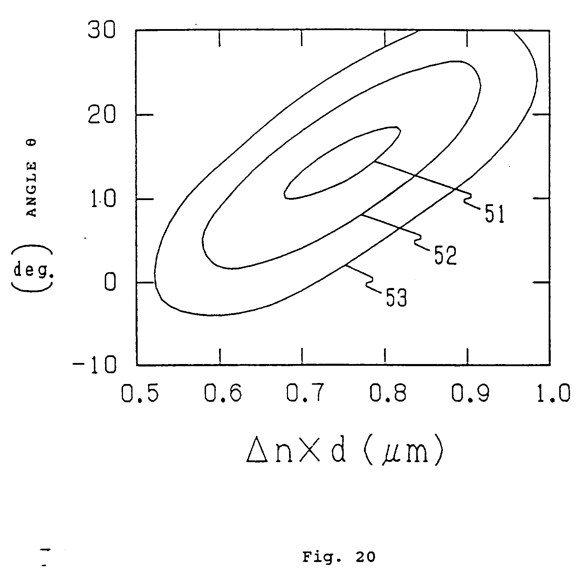

In Figure 20, the range of conditions of the liquid crystal display device which has sufficient display contrast is obtained as shown when the twist angle is similar to that of the present example (255°).

In the interior of each contrast curve 51, 52 and 53, a sufficient display contrast can be expected. For example, when the retardation value Δn x d is 0.7 µm and the angle θ is 5°, the contrast ratio if 1:11 and the luminance reflectance Y_{off} is 78%. Further, when the retardation value Δn x d is 0.9 µm and the angle θ is 28°, the contrast ratio is 1:9 and the luminance reflectance Y_{off} is 71%.

Outside the curves, a sufficient display contrast cannot be obtained. For example, when the retardation value Δn x d is 0.5 µm and the angle θ is 55°, the contrast ratio is 1:1 and the luminance reflectance Y_{off} is 81%. Further, when the retardation value Δn x d is 1.1 µm and the angle θ is 30°, the contrast ratio if 1:3 and the luminance reflectance Y_{off} is 63%.

Therefore, it is necessary for the value Δn x d to be at least in the range 0.52 µm to 0.98 µm, and the angle θ to be in the range -4° to 32° when the twist angle is 255°.

### Example 4

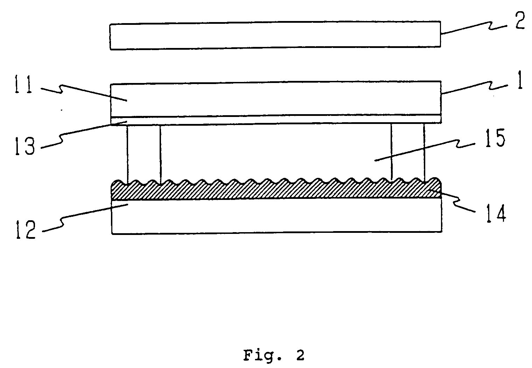

Figure 2 is a cross sectional view of the liquid crystal display device of the present example. This liquid crystal display device comprises a liquid crystal cell 1 and a polarising plate 2. The cell 1 has an upper substrate 11, a lower substrate 12, a transference electrode 13, a reflecting layer 14, being concurrently a pixel electrode, and a liquid crystal layer 15. The liquid crystal cell is similar to that of Example 1 in operation, and the average value for Δn x d was set to be 0.46 µm with the twist angle being 60° and the angle θ being in the range 0° to 4°, using the material ZLI-4472 (Δn = 0.0871) for the liquid crystal material.

The reflecting layer 14 is provided by forming a metal aluminium thin film on a ground glass surface of the substrate 12 having an irregularity of 0.5 µm by a spattering method, which gives a reflecting property with less directivity. For the metal, it is possible to use a material other than aluminium having a silver-white colour, such as nickel or chrome, and the irregularity of the metal surface can be formed by rough polishing or chemical treatment.

For patterning the resulting reflecting layer into a tandem form, it is possible to use a method for patterning the metal thin film directly or a method for providing the transference electrode through an insulator component on the metal thin film and for then patterning the transference electrode. Since the insulator is effective for relaxing the irregularity, the latter is suited to be used in a case in which the twist angle is large and the d/p margin (d designates the cell gap and p designates self pitch) is small.

By providing the reflecting layer within the liquid crystal cell, the peculiar problem of the conventional reflective type of liquid crystal display device that the display is seen in double can be solved. Further, a secondary effect that the colouring becomes less as a result of the slight variation of the liquid crystal thickness allowing the display colour to be averaged can be obtained. The variation of the liquid crystal thickness of 0.5 µm corresponds to a value Δn x d of 0.4 µm. However, it can be seen from Figure 12 that the contrast ratio is not affected by such variation.

### Example 5

The structure in this example is similar to that of Example 1, except that the twist angle is set to be 0°, the retardation value Δn x d is set to be 0.28 µm and the angle θ is set to be 44°. The contrast ratio C.R. is 1:27 and the luminance reflectance Y_{off} is 76%.

Since the twist angle of the liquid crystal display device of the present example is 0°, it has the characteristic that the manufacture thereof is easy.

In Figure 9, the range of conditions of the liquid crystal display device in which a sufficient display contrast can be obtained when the twist angle is 0° as shown. In this case, it is necessary in order to obtain a sufficient display contrast to set the value Δn x d to be in the range 0.22 µm to 0.32 µm and the angle θ to be in the range 34° to 55°.

### Example 6

The structure in this Example is similar to that of Example 1, except that the twist angle is set to be 30°, the retardation value Δn x d is set to be 0.3 µm and the angle θ is set to be 66°. The contrast ratio is 1:32 and the luminance reflectance Y_{off} is 78%.

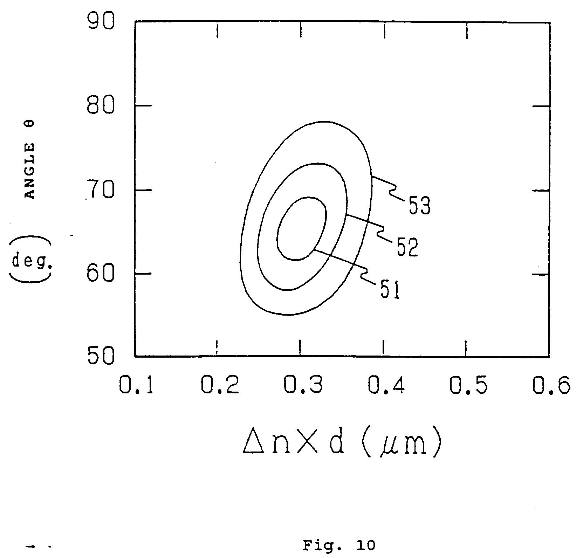

In Figure 10, the range of conditions of the liquid crystal display device in which a sufficient display contrast can be obtained when the twist angle is 30° are shown. In this case, it is necessary in order to obtain a sufficient display contrast to set the value Δn x d to be in the range 0.22 µm to 0.39 µm and the angle θ to be in the range 55° to 77°.

### Example 7

The structure in this Example is similar to that of Example 1, except that the twist angle is set to be 45°, the retardation value Δn x d is set to be 0.34 µm and the angle θ is set to be 76°. The contrast ratio C.R. is 1:34 and the luminance reflectance Y_{off} is 80%.

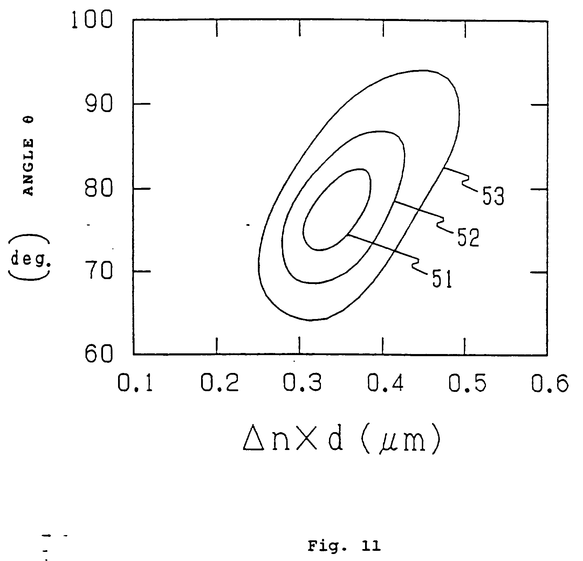

In Figure 11, the range of conditions of the liquid crystal display device in which a sufficient display contrast can be obtained when the twist angle is 45° are shown. In this case, it is necessary in order to obtain a sufficient display contrast to set the value Δn x d to be in the range 0.25 µm to 0.5 µm and the angle θ to be in the range 64° to 94°.

### Example 8

The structure in this Example is similar to that of Example 1, except that the twist angle is set to be 70°, the retardation value Δn x d is set to be 0.48 µm and the angle θ is set to be 8°. The contrast ratio is 1:10 and the luminance reflectance Y_{off} is 81%.

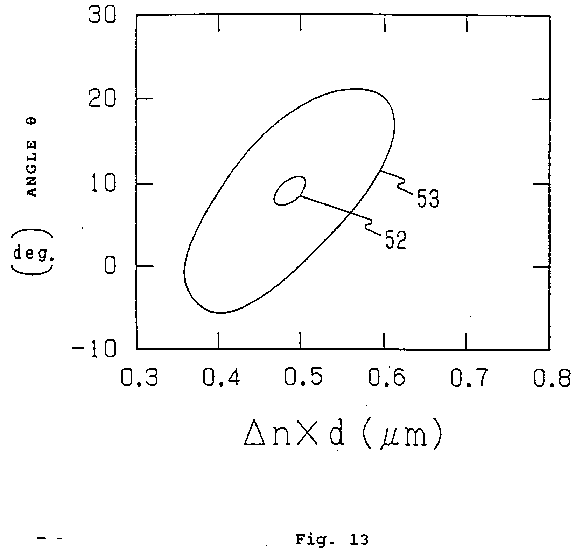

In Figure 13, the range of conditions of the liquid crystal display device in which a sufficient display contrast can be obtained when the twist angle is 70° are shown. In this case, it is necessary in order to obtain a sufficient display contrast to set the value Δn x d to be in the range 0.36 µm to 0.61 µm and the angle θ to be in the range -6° to 21°.

### Example 9

The structure in this Example is similar to that of Example 2, except that the twist angle is set to be 170°, the retardation value Δn x d is set to be 0.72 µm and the angle θ is 46°. The contrast ratio C.R. is 1:13 and the luminance reflectance Y_{off} is 67%.

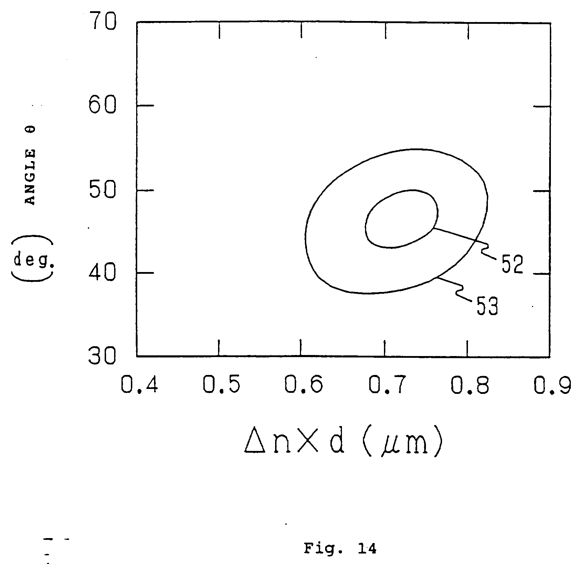

In Figure 14, the range of conditions of the liquid crystal display device in which a sufficient display contrast can be obtained when the twist angle is 170° are shown. In this case, it is necessary in order to obtain a sufficient display contrast to set the value Δn x d to be in the range 0.6 µm to 0.82 µm and the angle θ to be in the range 37° to 55°.

### Example 10

The structure in this Example is similar to that of Example 2, except that the twist angle is set to be 175°, the retardation value Δn x d is set to be 0.7 µm and the angle θ is set to be 48°. The contrast ratio is 1:16 and the luminance reflectance Y_{off} is 71%.

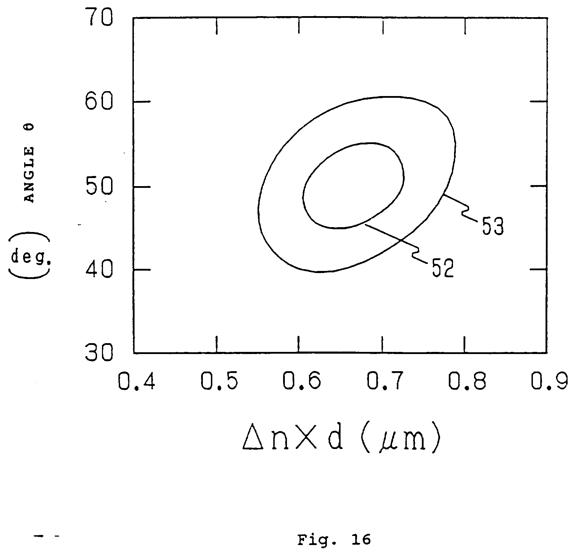

In Figure 16, the range of conditions of the liquid crystal display device in which a sufficient display contrast can be obtained when the twist angle is 175° are shown. In this case, it is necessary in order to obtain a sufficient display contrast to set the value Δn x d to be in the range 0.58 µm to 0.81 µm and the angle θ to be in the range 37° to 57°.

### Example 11

The structure in this Example is similar to that of Example 2, except that the twist angle is set to be 180°, the retardation value Δn x d is set to be 0.68 µm and the angle θ is set to be 50°. The contrast ratio is 1:18 and the luminance reflectance Y_{off} is 74%.

The liquid crystal display device of the present Example is superior to that of Example 2 in that it has less colouring in the display.

In Figure 16, the range of conditions of the liquid crystal display device in which a sufficient display contrast can be obtained when the twist angle is 180° are shown. In this case, it is necessary in order to obtain a sufficient display contrast to set the value Δn x d to be in the range 0.55 µm to 0.79 µm and the angle θ to be in the range 40° to 60°.

### Example 12

The structure in this Example is similar to that of Example 2, except that the twist angle is set to be 190°, the retardation value Δn x d is set to be 0.62 µm and the angle θ is set to be 54°. The contrast ratio C.R. is 1:21 and the luminance reflectance Y_{off} is 74%.

### Example 13

The structure in this Example is similar to that of Example 2, except that the twist angle is set to be 210°, the retardation value Δn x d is set to be 0.58 µm and the angle θ is set to be 66°. The contrast ratio C.R. is 1:20 and the luminance reflectance Y_{off} is 64%.

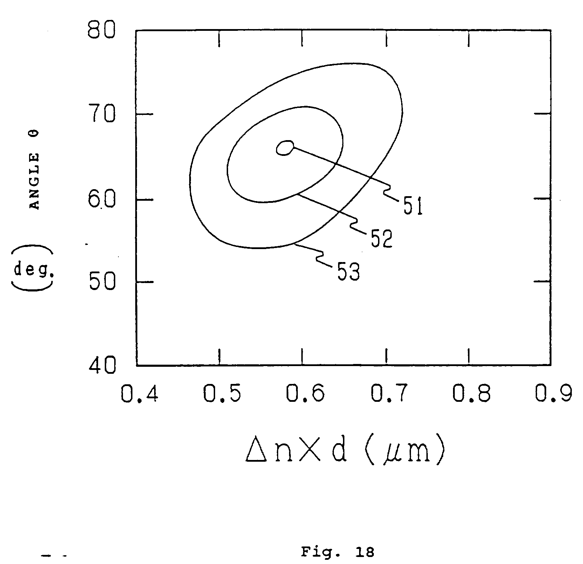

In Figure 18, the range of conditions of the liquid crystal display device in which a sufficient display contrast can be obtained when the twist angle is 210° are shown. In this case, it is necessary in order to obtain a sufficient display contrast to set the value Δn x d to be in the range 0.46 µm to 0.71 µm and the angle θ to be in the range 54° to 76°.

### Example 14

The structure in this Example is similar to that of Example 2, except that the twist angle is set to be 225°, the retardation value Δn x d is set to be 0.56 µm and the angle θ is set to be 76°. The contrast ratio C.R. is 1:20 and the luminance reflectance Y_{off} is 54%.

### Example 15

The structure in this Example is similar to that of Example 3, and hence similar to that of Example 2, except that the twist angle is set to be 240°, the retardation value Δn x d is set to be 0.62 µm and the angle θ is set to be -2°. The contrast ratio C.R. is 1:23 and the luminance reflectance Y_{off} is 62%.

### Example 16

The structure in this Example is similar to that of Example 3, except that the twist angle is set to be 250°, the retardation value Δn x d is set to be 0.7 µm and the angle θ is set to be 8°. The contrast ratio C.R. is 1:27 and the luminance reflectance Y_{off} is 74%.

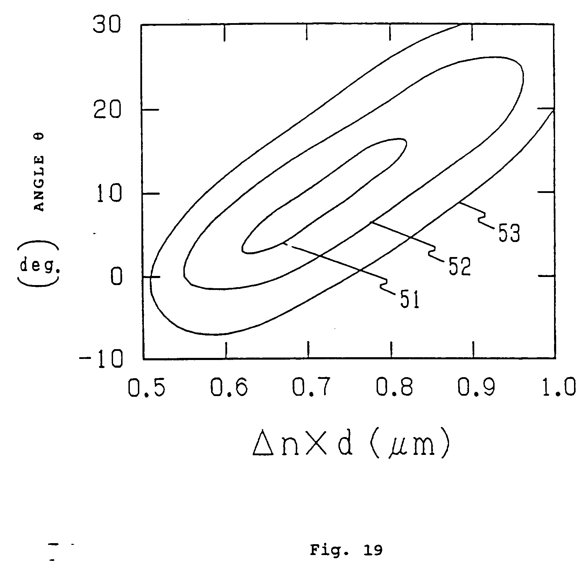

In Figure 19, the range of conditions of the liquid crystal display device in which a sufficient display contrast can be obtained when the twist angle is 250° are shown. In this case, it is necessary in order to obtain a sufficient display contrast to set the value Δn x d to be in the range 0.51 µm to 1.05 µm and the angle θ to be in the range -7° to 35°.

### Example 17

The structure in this Example is similar to that of Example 3, except that the twist angle is set to be 260°, the retardation value Δn x d is set to be 0.74 µm and the angle θ is set to be 16°. The contrast ratio C.R. is 1:16 and the luminance reflectance Y_{off} is 80%.

The liquid crystal display device of the present Example is superior to that of Example 3 in that it has less colour in the display.

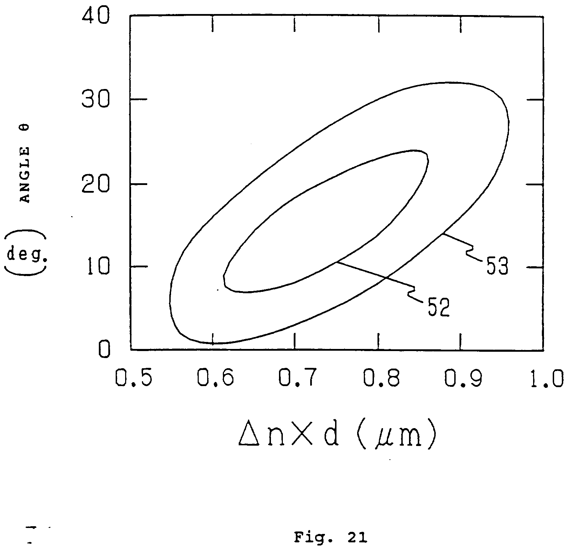

In Figure 21, the range of conditions of the liquid crystal display device in which a sufficient display contrast can be obtained when the twist angle is 260° are shown. In this case, it is necessary in order to obtain a sufficient display contrast to set the value Δn x d to be in the range 0.55 µm to 0.96 µm and the angle θ to be in the range 0° to 32°.

### Example 18

The structure in this Example is similar to that of Example 3, except that the twist angle is set to be 265°, the retardation value Δn x d is set to be 0.74 µm and the angle θ is set to be 18°. The contrast ratio C.R. is 1:10 and the luminance reflectance Y_{off} is 81%.

The liquid crystal display device of the present Example is superior to that of Example 3 and that of Example 16 in that it has less colour in the display.

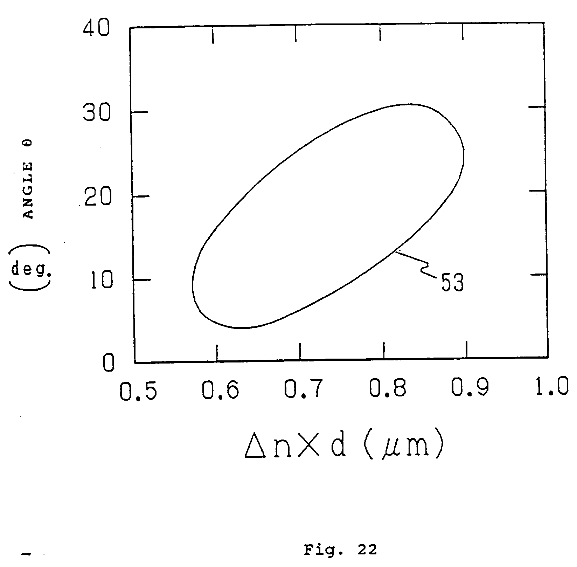

In Figure 22, the range of conditions of the liquid crystal display device in which a sufficient display contrast can be obtained when the twist angle is 265° are shown. In this case, it is necessary in order to obtain a sufficient display contrast to set the value Δn x d to be in the range 0.57 µm to 0.90 µm and the angle θ to be in the range 4° to 30°.

### Example 19

The structure in this Example is similar to that of Example 3, except that the twist angle is set to be 270°, the retardation value Δn x d is set to be 0.7 µm and the angle θ is set to be 18°. The contrast ratio C.R. is 1:6 and the luminance reflectance Y_{off} is 80%.

The liquid crystal display device of the present Example is superior to those of Examples 3, 16 and 17 in that it has less colour in the display.

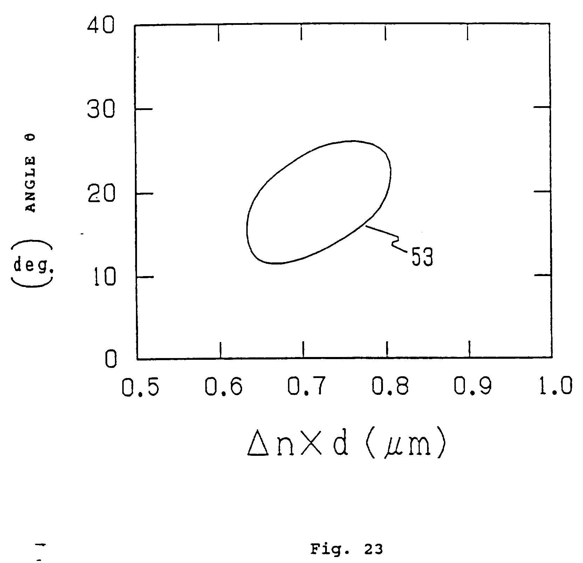

In Figure 23, the range of conditions of the liquid crystal display device in which a sufficient display contrast can be obtained when the twist angle is 270° are shown. In this case, it is necessary in order to obtain a sufficient display contrast to set the value Δn x d to be in the range 0.64 µm to 0.81 µm and the angle θ to be in the range 12° to 26°.

### Comparative Experiment 1

The structure in this Experiment is similar to that of Example 1, except that the twist angle is set to be 75°, the retardation value Δn x d is set to be 0.48 µm and the angle θ is set to be 10°. The contrast ratio C.R. is 1:6 and the luminance reflectance Y_{off} is 81%. When the twist angle is 75° as in this Experiment, this characteristic becomes the best. The conditions in which a contrast ratio of more than 1:5 can be obtained are extremely narrow. A satisfactory display cannot be obtained in this instance.

### Comparative Experiment 2

The structure in this Experiment is similar to that of Example 2, except that the twist angle is set to be 165°, the retardation value Δn x d is set to be 0.76 µm and the angle θ is set to be 46°. The contrast ratio C.R. is 1:10 and the luminance reflectance Y_{off} is 61%. The colour in the display is noticeably greater by comparison with Example 10. A satisfactory display cannot be obtained in this instance.

### Comparative Experiment 3

The structure in this Experiment is similar to that of Example 3, except that the twist angle is set to be 285°, the retardation value Δn x d is set to be 0.7 µm and the angle θ is set to be 20°. The contrast ratio C.R. is 1: 2 and the luminance reflectance Y_{off} is 82%. When the twist angle is 285° as in this instance, this characteristic becomes the best. A satisfactory display cannot be obtained in this instance.

In the above described Examples, the twist angle has been varied on each occasion by 5°, but this is only for the convenience of experiment. Since variation of the characteristics by altering the twist angle occurs in series, any value of twist angle within the limits described can be freely taken.

## Claims

1. A liquid crystal display device comprising a liquid crystal cell (1) having a twist orientated liquid crystal layer (15) sandwiched between a pair of opposed first and second substrates (11, 12); and a linear polarising plate (2) and a reflecting layer (4, 14) disposed on opposite sides of the liquid crystal layer (15), characterised in that the liquid crystal layer has a twist angle in the range 0° to 70°, a retardation value Δn x d in the range 0.2 µm to 0.7 µm, where Δ n is the birefringence ratio of the liquid crystal layer and d is the thickness of the liquid crystal layer, and the angle θ formed between the polarisation axis of the polarising plate with the rubbing direction of the adjacent first substrate (11) is in the range 35° to 115°, or that range shifted by an integral multiple of 90°, the twist direction of the liquid crystal layer being positive, the arrangement being such that the twist angle, the retardation Δn x d and the angle θ are such that the light impinging on the reflecting layer from the liquid crystal layer is substantially linearly polarised light.

2. A display device comprising a liquid crystal cell (1) having a twist orientated liquid crystal layer (15) sandwiched between a pair of opposed substrates (11, 12); and a linear polarising plate (2) and reflecting layer (4, 14), disposed on opposite sides of the liquid crystal layer, characterised in that the liquid crystal layer has a twist angle in the range 175° to 210°, and a retardation value or Δ n x d in the range 0.51 µm to 0.75 µm, where Δ n is the birefringence ratio of the liquid crystal layer and d is the thickness of the liquid crystal layer and the angle θ formed between the polarisation axis of the polarising plate with the rubbing direction of the adjacent first substrate (11) is in the range 42° to 71°, or that range shifted by an integral multiple of 90°, the twist direction of the liquid crystal layer being positive, the arrangement being such that the twist angle, the retardation Δ n x d and the angle θ are such that the light impinging on the reflection layer from the liquid crystal layer is substantially linearly polarised light.

3. A display device comprising a liquid crystal cell (1) having a twist orientated liquid crystal layer (15) sandwiched between a pair of opposed substrates (11, 12); and a linear polarising plate (2) and reflecting layer (4, 14), disposed on opposite sides of the liquid crystal layer, characterised in that the liquid crystal layer has a twist angle in the range 250° to 265°, and a retardation value Δ n x d in the range 0.55 µm to 0.96 µm, where Δ n is the birefringence ratio of the liquid crystal layer and d is the thickness of the liquid crystal layer, and the angle θ formed between the polarisation axis of the polarising plate with the rubbing direction of the adjacent first substrate (11) is in the range -2° to 30°, or that range shifted by an integral multiple of 90°, the twist direction of the liquid crystal layer being positive, the arrangement being such that the twist angle, retardation Δ n x d and the angle θ are determined so that the light impinging on the reflecting layer from the liquid crystal layer is substantially linearly polarised light.

4. A display device according to claims 1, 2 or 3 characterised by having only a single polarising plate, which is arranged on one side of the liquid crystal cell, with the reflecting layer being provided on the other side of the liquid crystal cell or within the liquid crystal cell adjacent the other side thereof.

5. A display device according to claims 1, 2 or 3 characterised in that one (12) of the opposed substrates has a surface irregularity in the range 0.1 µm to 2.0 µm on its surface facing the liquid crystal layer.

6. A display device according to claim 5 characterised in that the reflecting layer comprises a film provided on said surface of said one substrate.

7. A liquid crystal display as claimed in claim 1 characterised in that the twist angle is in the range 30° to 70°, the retardation value Δn x d is in the range 0.25 µm to 0.64 µm, and the angle θ is in the range 58° to 111°.

## Patentansprüche

1. Flüssigkristallanzeigevorrichtung, umfassend eine Flüssigkristallzelle (1) mit einer verwunden orientierten Flüssigkristallschicht (15), welche sandwichartig zwischen einem Paar gegenüberliegender erster und zweiter Substrate (11, 12) angeordnet ist, und eine linear polarisierende Platte (2) und eine reflektierende Schicht (4, 14), welche an entgegengesetzten Seiten der Flüssigkristalischicht (15) angeordnet sind,
dadurch gekennzeichnet,
daß die Flüssigkristallschicht einen Verwindungswinkel im Bereich von 0° bis 70° aufweist, einen Verzögerungswert Δn x d im Bereich von 0,2 µm bis 0,7 µm aufweist, wobei Δn das Doppelbrechungsverhältnis der Flüssigkristallschicht ist und d die Dicke der Flüssigkristallschicht ist, und wobei der Winkel θ, welcher zwischen der Polarisationsachse der polarisierenden Platte und der Polierrichtung des benachbarten ersten Substrats (11) gebildet ist, im Bereich von 35° bis 115° ist oder in diesem Bereich, verschoben um ein ganzzahliges Vielfaches von 90°, wobei die Verwindungsrichtung der Flüssigkristallschicht positiv ist, wobei die Anordnung derart ist, daß der Verwindungswinkel, die Verzögerung Δn x d und der Winkel θ derart sind, daß auf die reflektierende Schicht von der Flüssigkristallschicht auftreffendes Licht im wesentlichen linear polarisiertes Licht ist.

2. Anzeigevorrichtung, umfassend eine Flüssigkristallzelle (1) mit einer verwunden orientierten Flüssigkristallschicht (15), welche sandwichartig zwischen einem Paar gegenüberliegender Substrate (11, 12) angeordnet ist, und eine linear polarisierende Platte (2) und eine reflektierende Schicht (4, 14), welche an entgegengesetzten Seiten der Flüssigkristallschicht angeordnet sind,
dadurch gekennzeichnet,
daß die Flüssigkristallschicht einen Verwindungswinkel im Bereich von 175° bis 210° aufweist und einen Verzögerungswert oder Δn x d im Bereich von 0,51 µm bis 0,75 µm aufweist, wobei Δn das Doppelbrechungsverhältnis der Flüssigkristallschicht ist und d die Dicke der Flüssigkristallschicht ist, und wobei der Winkel θ, welcher zwischen der Polarisationsachse der polarisierenden Platte und der Polierrichtung des benachbarten ersten Substrats (11) gebildet ist, im Bereich von 42° bis 71° ist, oder in diesem Bereich, verschoben um ein ganzzahliges Vielfaches von 90°, wobei die Verwindungsrichtung der Flüssigkristallschicht positiv ist, wobei die Anordnung derart ist, daß der Verwindungswinkel, die Verzögerung Δn x d und der Winkel θ derart sind, daß auf die reflektierende Schicht von der Flüssigkristallschicht auftreffendes Licht im wesentlichen linear polarisiertes Licht ist.

3. Anzeigevorrichtung, umfassend eine Flüssigkristallzelle (1) mit einer verwunden orientierten Flüssigkristallschicht (15), welche sandwichartig zwischen einem Paar gegenüberliegender Substrate (11, 12) angeordnet ist, und eine linear polarisierende Platte (2) und eine reflektierende Schicht (4, 14), welche an entgegengesetzten Seiten der Flüssigkristallschicht angeordnet sind,
dadurch gekennzeichnet,
daß die Flüssigkristallschicht einen Verwindungswinkel im Bereich von 250° bis 265° aufweist und einen Verzögerungswert Δn x d im Bereich von 0,55 µm bis 0,96 µm aufweist, wobei Δn das Doppelbrechungsverhältnis der Flüssigkristallschicht ist und d die Dicke der Flüssigkristallschicht ist, und wobei der Winkel θ, welcher zwischen der Polarisationsachse der polarisierenden Platte und der Polierrichtung des benachbarten ersten Substrats (11) gebildet ist, im Bereich von -2° bis 30° ist oder in diesem Bereich, verschoben um ein ganzzahliges Vielfaches von 90°, wobei die Verwindungsrichtung der Flüssigkristallschicht positiv ist, wobei die Anordnung derart ist, daß der Verwindungswinkel, die Verzögerung Δn x d und der Winkel θ derart bestimmt sind, daß auf die reflektierende Schicht von der Flüssigkristallschicht auftreffendes Licht im wesentlichen linear polarisiertes Licht ist.

4. Anzeigevorrichtung nach Anspruch 1, 2 oder 3,
dadurch gekennzeichnet,
daß sie nur eine einzige polarisierende Platte aufweist, welche einer Seite der Flüssigkristallzelle angeordnet ist, wobei die reflektierende Schicht an der anderen Seite der Flüssigkristallzelle oder innerhalb der Flüssigkristallzelle benachbart der anderen Seite derselben vorgesehen ist.

5. Anzeigevorrichtung nach Anspruch 1, 2 oder 3,
dadurch gekennzeichnet,
daß eines (12) der gegenüberliegenden Substrate eine Oberflächenunregelmäßigkeit im Bereich von 0,1 µm bis 2,0 µm auf seiner zur Flüssigkristallschicht weisenden Oberfläche aufweist.

6. Anzeigevorrichtung nach Anspruch 5,
dadurch gekennzeichnet,
daß die reflektierende Schicht einen auf der Oberfläche des einen Substrats vorgesehenen Film umfaßt.

7. Anzeigevorrichtung nach Anspruch 1,
dadurch gekennzeichnet,
daß der Verwindungswinkel im Bereich von 30° bis 70° liegt, der Verzögerungswert Δn x d im Bereich von 0,25 µm bis 0,64 µm liegt und der Winkel θ im Bereich von 58° bis 111° liegt.

## Revendications

1. Dispositif d'affichage à cristal liquide comprenant une cellule de cristal liquide (1) ayant une couche de cristal liquide (15), orientée en spirale, intercalée entre une paire de premier et second substrats opposés (11, 12) ; et une plaque polarisante linéaire (2) et une couche réflectrice (4, 14) placées sur des côtés opposés de la couche de cristal liquide (15), caractérisé en ce que la couche de cristal liquide a un angle de torsion dans la gamme 0° à 70°, une valeur de ralentissement Δn x d dans la gamme de 0,2 µm à 0,7 µm, où Δn est le rapport de biréfringence de la couche de cristal liquide et d est l'épaisseur de la couche de cristal liquide, et l'angle θ formé entre l'axe de polarisation de la plaque polarisante avec la direction de frottement du premier substrat contigu (11) est dans la gamme de 35° à 115°, ou cette gamme décalée par un multiple entier de 90°, la direction de torsion de la couche de cristal liquide étant positive, le dispositif étant tel que l'angle de torsion, le ralentissement Δn x d et l'angle θ sont tels que la lumière incidente sur la couche réflectrice provenant de la couche de cristal liquide est substantiellement de la lumière polarisée linéairement.

2. Dispositif d'affichage comprenant une cellule de cristal liquide (1) ayant une couche de cristal liquide orientée en spirale (15) intercalée entre deux substrats opposés (11, 12) ; et une plaque polarisante linéaire (2) et une couche réflectrice (4, 14) placées sur des côtés opposés de la couche de cristal liquide, caractérisé en ce que la couche de cristal liquide a un angle de torsion dans la gamme de 175° à 210°, et une valeur de ralentissement ou Δn x d dans la gamme de 0,51 µm à 0,75 µm, où Δn est le rapport de biréfringence de la couche de cristal liquide et d est l'épaisseur de la couche de cristal liquide et l'angle θ formé entre l'axe de polarisation de la plaque polarisante avec la direction de frottement du premier substrat contigu (11) est dans la gamme de 42° à 71°, ou cette gamme décalée par un multiple entier de 90°, la direction de torsion de la couche de cristal liquide étant positive, le dispositif étant tel que l'angle de torsion, le ralentissement Δn x d et l'angle θ sont tels que la lumière incidente sur la couche réflectrice provenant de la couche de cristal liquide est substantiellement de la lumière polarisée linéairement.

3. Dispositif d'affichage comprenant une cellule de cristal liquide (1) ayant une couche de cristal liquide orientée en spirale (15) intercalée entre deux substrats opposés (11, 12) ; et une plaque polarisante linéaire (2) et une couche réflectrice (4, 14) placées sur des côtés opposés de la couche de cristal liquide, caractérisé en ce que la couche de cristal liquide a un angle de torsion dans la gamme de 250° à 265°, et une valeur de ralentissement Δn x d dans la gamme de 0,55 µm à 0,96 µm, où Δn est le rapport de biréfringence de la couche de cristal liquide et d est l'épaisseur de la couche de cristal liquide, et l'angle θ formé entre l'axe de polarisation de la plaque polarisante avec la direction de frottement du premier substrat contigu (11) est dans la gamme de -2° à 30°, ou cette gamme décalée par un multiple entier de 90°, la direction de torsion de la couche de cristal liquide étant positive, le dispositif étant tel que l'angle de torsion, le ralentissement Δn x d et l'angle θ sont déterminés de sorte que la lumière incidente sur la couche réflectrice provenant de la couche de cristal liquide est substantiellement de la lumière polarisée linéairement.

4. Dispositif d'affichage selon l'une quelconque des revendications 1, 2 ou 3, caractérisé en ce qu'il a seulement une seule plaque polarisante, qui est agencée sur un côté de la cellule de cristal liquide, avec la couche réflectrice prévue sur l'autre côté de la cellule de cristal liquide ou à l'intérieur de la cellule de cristal liquide contiguë à son autre côté.

5. Dispositif d'affichage selon l'une quelconque des revendications 1, 2 ou 3, caractérisé en ce que l'un (12) des substrats opposés a une irrégularité de surface dans la gamme de 0,1 µm à 2,0 µm sur sa surface faisant face à la couche de cristal liquide.

6. Dispositif d'affichage selon la revendication 5, caractérisé en ce que la couche réflectrice comprend un film prévu sur ladite surface dudit substrat.

7. Affichage à cristal liquide selon la revendication 1, caractérisé en ce que l'angle de torsion est dans la gamme de 30° à 70°, la valeur de ralentissement Δn x d est dans la gamme de 0,25 µm à 0,64 µm, et l'angle θ est dans la gamme de 58° à 111°.
